(19) Europäisches Patentamt
European Patent Office
Office européen des brevets

(11) **EP 0 741 471 B1**

(12) **FASCICULE DE BREVET EUROPEEN**

(45) Date de publication et mention
de la délivrance du brevet:
**10.07.2002 Bulletin 2002/28**

(51) Int Cl.⁷: **H04L 1/20**, H04M 3/22,
H04B 3/46, H04J 3/17

(21) Numéro de dépôt: **96400927.8**

(22) Date de dépôt: **30.04.1996**

(54) **Procédé et dispositif de mesure sans intrusion de la qualité de transmission d'une ligne téléphonique**

Nicht-beeinflussende Bestimmung der Übertragungsqualität auf Telephonleitungen

Non-intrusive measurement of telephone transmission line quality

(84) Etats contractants désignés:
**DE GB IT**

(30) Priorité: **04.05.1995 FR 9505347**

(43) Date de publication de la demande:
**06.11.1996 Bulletin 1996/45**

(73) Titulaire: **FRANCE TELECOM**
**75015 Paris (FR)**

(72) Inventeurs:
• **Barriac, Vincent**
**22300 Lannion (FR)**
• **Gilloire, André**
**22300 Lannion (FR)**

(74) Mandataire: **Fréchède, Michel et al**
**Cabinet Plasseraud**
**84, rue d'Amsterdam**
**F-75440 Paris Cédex 09 (FR)**

(56) Documents cités:
**EP-A- 0 047 590**    **EP-A- 0 565 224**

• **IEE COLLOQUIUM ON 'AUDIO DSP - CIRCUITS AND SYSTEMS' (DIGEST NO. 1993/219), LONDON, UK, 16 NOV. 1993, 1993, LONDON, UK, IEE, UK, pages 2/1-4, XP000573308 MILNER S H ET AL: "Live network assessment using digital signal processing"**
• **IEEE GLOBAL TELECOMMUNICATIONS CONFERENCE. GLOBECOM '91. COUNTDOWN TO THE NEW MILLENNIUM. FEATURING A MINI-THEME ON: PERSONAL COMMUNICATIONS SERVICES (PCS). CONFERENCE RECORD (CAT. NO.91CH2980-1), PHOENIX, AZ, USA, 2-5 DEC. 1991, ISBN 0-87942-697-7, 1991, NEW YORK, NY, USA, IEEE, USA, pages 1761-1764 vol.3, XP000313702 RAMSDEN D B: "In-service, nonintrusive measurement on speech signals"**

**Description**

L'invention concerne un procédé et un dispositif de mesure sans intrusion de la qualité de transmission d'une ligne téléphonique.

Pour mesurer la qualité de transmission d'une ligne téléphonique, il est possible d'opérer de deux manières. La première consiste à envoyer un signal spécifique en entrée de ligne et à analyser le signal reçu en extrémité de ligne, selon un mode opératoire avec intrusion.

La deuxième, mode opératoire sans intrusion, consiste au moyen d'appareils appelés I.N.M.D. (pour *In Service Non Intrusive Measurement Device* en langage anglo-saxon), à effectuer directement des mesures sur les signaux réels support des conversations téléphoniques transitant sur le réseau téléphonique, en n'importe quel point de la ligne de transmission.

Ces types d'appareils ont déjà fait l'objet d'une normalisation par l'A.N.S.I. (*American National Standard Institute*/ organisme nord-américain de normalisation).

En particulier, afin de bien caractériser la qualité des communications, quatre paramètres principaux ont été retenus :

- le niveau vocal actif dans les deux sens de transmission, en dBm ;
- le niveau de bruit dans les deux sens de transmission, en dBm ;
- le retard sur le trajet d'écho, en ms ;
- l'affaiblissement sur le trajet d'écho, en dB.

On rappelle que le trajet d'écho représente le chemin parcouru par un signal de parole entre l'instant où un locuteur parle dans son combiné téléphonique et celui où il entend sa propre voix en retour, affaiblie et décalée dans le temps. D'autres paramètres pourront, le cas échéant, être utilisés.

D'une manière générale, les modes opératoires de mesure de ces paramètres ne sont pas fixés dans les projets de recommandation internationale mais les objectifs et performances le sont, et les valeurs limites admissibles sont directement inspirées des résultats des méthodes expérimentales mises en oeuvre jusqu'à ce jour.

Parmi ces méthodes, on peut citer la méthode qui a fait l'objet de la publication par l'UIT - Secteur de la normalisation des télécommunications, Commission d'études 12, question 24/12, source ATQT intitulée "*In service Non Intrusive Measurement Algorithms and Field Results*", Genève 10-19 mai 1993.

Une telle méthode, en vue de procéder à la mesure de certains paramètres précités tels que le retard sur le trajet d'écho, nécessite la mise en oeuvre d'un processus de convergence sur plus de dix mille itérations de filtres adaptatifs à quatre vingt coefficients, l'un après l'autre, chacun couvrant une fenêtre d'analyse de signal de dix millisecondes, avant de déterminer le filtre qui a le mieux convergé pour calculer, à partir de son coefficient le plus élevé, avec une précision d'au moins une milliseconde, le retard recherché et l'affaiblissement correspondant.

Ainsi, pour pouvoir mesurer des retards d'écho compris entre zéro et cent millisecondes, il est nécessaire d'utiliser dix de ces filtres et consommer en conséquence un temps de calcul important, ce temps devenant même prohibitif si la plage de mesure des retards est portée à deux cents millisecondes et au-delà.

Bien qu'un projet de recommandation internationale ait, pour l'instant, fixé la limite supérieure d'une plage à cinquante millisecondes, pour ce type de mesures, à partir des appareillages existants, dans le cadre de communications téléphoniques locales, la limite supérieure de la plage des valeurs de retard a été portée à une seconde pour les appareils capables de traiter les communications internationales. L'utilisation des appareils de type I.N.M.D. précités pour caractériser des communications internationales, notamment lorsque celles-ci sont acheminées par satellite, implique en effet la mesure de retards d'écho de plusieurs centaines de millisecondes.

La méthode précitée présente donc des limitations réelles et potentielles dans la mesure où, limitée à la mesure de retards d'écho limités à cent millisecondes, il ne paraît guère envisageable, par une simple augmentation des capacités de calcul, d'en multiplier les capacités de traitement en raison d'une très grande complexité de mise en oeuvre.

L'état de la technique décrit également des développements relatifs à la mesure sans intrusion du niveau de bruit dans un signal de parole.

Le document EP-A- 0 565 24 propose d'effectuer de telles mesures par calcul d'une moyenne de niveau d'énergie d'échantillons sur un nombre déterminé de mesures.

Le document IEEE COLLOQUIUM ON "AUDIO DSP - CIRCUITS AND SYSTEMS", London, GB, 16.11.1993, IEE, London GB, pages 2-1 - 2-4 publié par S.H. MILNER, R.A. CRYAN, J.M. SENIOR et C.R. SOUTH, et intitulé "*Live Network Assessment using Digital Signal Processing*" décrit, de manière très générale, la modélisation de la réponse impulsionnelle d'un trajet d'écho.

La présente invention a pour objet de remédier aux inconvénients et aux limitations de la méthode précitée et notamment d'assurer la stabilité de la convergence des filtres utilisés pour la mise en oeuvre des opérations de mesure proprement dites.

Un autre objet de la présente invention est en outre, dans le cadre d'une stabilité du processus de convergence du filtrage précité, une accélération de ce processus de convergence, et, corrélativement, une diminution des coûts en temps de calcul.

Un autre objet de la présente invention est également, dans le cadre du processus de convergence stabilisé et accéléré précité, une amélioration et un élargissement de la plage de mesure des retards d'écho précités tout en conservant une précision comparable de ces mesures.

Un autre objet de la présente invention est, enfin, la mise en oeuvre d'un procédé et d'un dispositif du type I.N.M.D. permettant conjointement d'effectuer en outre une mesure convenable de l'affaiblissement sur le trajet d'écho.

Le procédé de mesure sans intrusion de la qualité de transmission d'une ligne téléphonique, à partir de mesures successives sur le signal de parole et le signal d'écho de ce signal de parole constitutifs du trafic en un point de cette ligne téléphonique, objet de la présente invention, est remarquable en ce qu'il consiste à prélever, sur une durée déterminée sur le signal de parole et le signal d'écho transitant sur la ligne téléphonique, des échantillons du signal de parole et du signal d'écho. Les échantillons du signal de parole sont filtrés au moyen d'un filtrage passe-bas sur une durée déterminée et les échantillons du signal d'écho sont également filtrés au moyen d'un filtrage passe-bas sur une durée sensiblement égale à la moitié de cette durée déterminée mais décalée de la moitié de celle-ci, ce qui permet d'obtenir des signaux d'enveloppe du signal de parole et du signal d'écho. Une pluralité de coefficients d'intercorrélation entre les signaux d'enveloppe du signal de parole et du signal d'écho, pour des retards successifs distincts de pas de retard déterminé est établie. Une comparaison des coefficients d'intercorrélation permet de discriminer le coefficient d'intercorrélation de valeur la plus grande, pour une valeur de retard spécifique, cette valeur de retard spécifique étant représentative de la mesure du retard du signal d'écho au point de mesure de la ligne téléphonique.

Le dispositif de mesure sans intrusion de la qualité de transmission d'une ligne téléphonique sur laquelle transitent un signal de parole et un signal d'écho, objet de la présente invention, est remarquable en ce qu'il comprend des circuits de prélèvement sur une durée déterminée sur le signal de parole et le signal d'écho, d'un nombre prédéterminé d'échantillons de ces signaux. Un module de filtrage de type passe-bas permet de filtrer sur une durée déterminée les échantillons du signal de parole et sur une durée sensiblement égale à la moitié de cette durée déterminée, décalée de la moitié de cette même durée, les échantillons du signal d'écho, pour engendrer des signaux d'enveloppe du signal de parole et du signal d'écho. Un module de calcul d'une pluralité de coefficients d'intercorrélation entre signaux d'enveloppe du signal de parole et du signal d'écho, pour des retards successifs distincts, permet de discriminer le coefficient d'intercorrélation de valeur la plus grande pour une valeur de retard spécifique, laquelle est représentative de la mesure du retard du signal d'écho, au point de mesure de la ligne téléphonique.

Le procédé et le dispositif, objets de la présente invention, trouvent application à la gestion et à la surveillance des lignes téléphoniques numériques dans lesquelles le signal téléphonique est transmis à des débits égaux ou supérieurs à 64 kb/s.

Ils seront mieux compris à la lecture de la description et à l'observation des dessins ci-après dans lesquels :

- la figure la représente, à titre illustratif, un organigramme de mise en oeuvre du procédé de mesure sans intrusion de la qualité de transmission d'une ligne téléphonique, objet de la présente invention ;
- la figure 1b représente un détail de mise en oeuvre du procédé selon l'invention, tel que représenté en figure la ;
- la figure 2 représente un schéma illustratif, sous forme de diagramme bloc, d'un dispositif de mesure sans intrusion de la qualité d'une ligne téléphonique, objet de la présente invention ;
- les figures 3a à 31 représentent la valeur de la fonction d'intercorrélation des signaux d'enveloppe du signal de parole et d'écho, valeur des coefficients d'intercorrélation pour différentes valeurs de pas de retard entre les valeurs centrées du signal d'enveloppe du signal d'écho et du signal de parole, pour des retards spécifiques entre signal de parole et signal d'écho compris entre 3 ms et 1997 ms.

Une description plus détaillée du procédé de mesure sans intrusion de la qualité de transmission d'une ligne téléphonique, objet de la présente invention, sera maintenant donnée en liaison avec la figure la.

D'une manière générale, on indique que la ligne téléphonique est le siège d'un trafic constitué par un signal de parole et par un signal d'écho de ce signal de parole, ces signaux étant des signaux numériques constitués par une suite d'échantillons transmis à un débit de 64 kb/s par exemple. Le signal de parole transitant sur la ligne téléphonique dans un sens direct provoque en extrémité de ligne téléphonique, au point de destination du signal de parole, un signal d'écho, lequel est réfléchi en sens contraire sur la ligne téléphonique vers la source d'émission du signal de parole.

Conformément à un aspect particulièrement avantageux du procédé objet de la présente invention, celui-ci, ainsi que représenté en figure la, consiste à effectuer en un point de mesure de la ligne téléphonique considérée, un prélèvement, noté 100, d'échantillons du signal de parole et du signal d'écho afin d'obtenir un nombre déterminé de ces échantillons. Le prélèvement est effectué de manière classique sur une fenêtre d'observation de durée déterminée, cette durée pouvant par exemple être prise égale à deux secondes. Le signal de parole et le signal d'écho étant par exemple formés par des échantillons obtenus par modulation par impulsion et codage (MIC) à une fréquence de 8 kHz par exemple, 16 000 valeurs sur chaque sens de circulation du signal de parole respectivement du signal d'écho sont obtenues, ces valeurs ou échantillons prélevés étant notés par exemple $e_{(0)}$ à $e_{(15\ 999)}$ pour le signal de parole et $r_{(0)}$ à $r_{(15\ 999)}$ pour le signal d'écho. On indique bien sûr que le prélèvement doit être effectué en s'assurant régulièrement toutes les 400 millisecondes par exemple que les signaux transitant sur la ligne sont effectivement constitués par des signaux de parole et que le sens de transmission des signaux ne s'inverse pas. Ces procédures de vérification sont classiques, et, à ce titre, elles ne seront pas décrites en détail.

Les échantillons prélevés constituent au point de mesure de la ligne téléphonique des signaux de mesure du signal de parole et du signal d'écho. D'une manière générale, on indique que la désignation signal couvre toute suite d'échantillons numériques mémorisés ou lus à une fréquence de lecture appropriée.

Le procédé objet de la présente invention consiste ensuite, en une étape 200, à effectuer un filtrage de type passe-bas sur les échantillons du signal de parole respectivement sur les échantillons du signal d'écho.

Selon une caractéristique particulière du procédé objet de la présente invention, le filtrage de type passe-bas est effectué pendant la durée déterminée, c'est-à-dire la durée de deux secondes de prélèvement des échantillons sur les échantillons du signal de parole et sur une durée sensiblement égale à la moitié de cette durée déterminée, soit sensiblement une seconde, et décalée de la moitié de cette durée déterminée, c'est-à-dire sur la dernière seconde, sur les échantillons du signal d'écho. On comprend ainsi que le filtrage de type passe-bas est effectué sur les échantillons $e_{(0)}$ à $e_{(15\ 999)}$ alors que ce même processus de filtrage passe-bas n'est effectué que sur les échantillons $r_{(8\ 000)}$ à $r_{(15\ 999)}$ en ce qui concerne le signal d'écho.

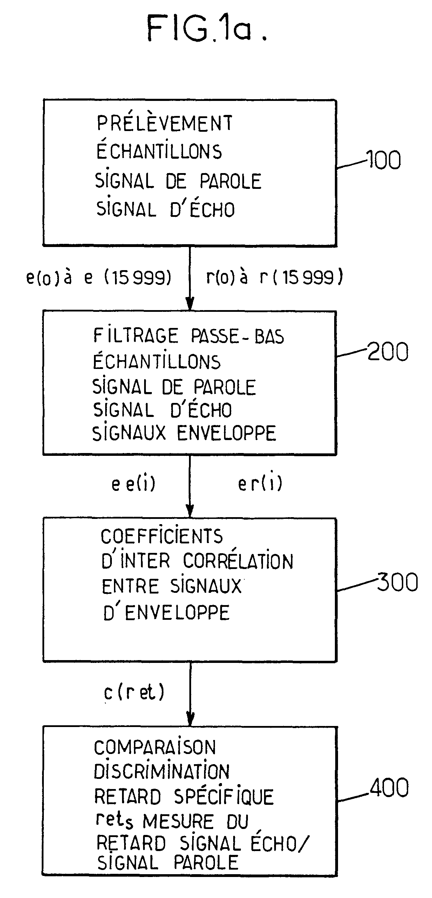

L'opération de filtrage de type passe-bas, référencée 200 sur la figure 1a, permet ainsi d'obtenir des signaux d'enveloppe du signal de parole et du signal d'écho précédemment cités. Ces signaux d'enveloppe sont notés ee(i) respectivement er(i).

Par l'opération de filtrage, portant la référence 200, on comprend qu'on obtient en fait deux mille valeurs numériques selon l'exemple précité, représentatives de valeurs du signal d'enveloppe d'émission, notées ee(i), et mille valeurs du signal d'écho, notées er(i), ces valeurs étant bien entendu mémorisées pour un traitement ultérieur. On comprend en effet que l'opération de filtrage de type passe-bas a pour effet de lisser les valeurs échantillons obtenues à l'issue de l'étape 100 précédente à une fréquence de 1 Khz par exemple en effectuant un sous-échantillonnage de rapport 8. Les signaux d'enveloppe du signal de parole et du signal d'écho vérifient alors la relation dans l'exemple précité :

$$ee(i) = ee(i-1).(1-1/128) + e(8i)/128$$

pour $i \in$ [0 à 1999].

Les signaux d'enveloppe précités ayant été obtenus, le procédé objet de la présente invention consiste alors, en une étape notée 300, à établir une pluralité de coefficients d'intercorrélation entre les signaux d'enveloppe précités pour des retards successifs distincts de pas de retard déterminé.

Dans un mode de réalisation donné à titre d'exemple non limitatif, on indique que les retards utilisés sont compris entre 5 et 1000 millisecondes avec des pas de retard de 5 millisecondes, ce qui permet d'obtenir environ 200 valeurs de coefficients d'intercorrélation, ces coefficients d'intercorrélation permettant bien entendu de calculer la corrélation entre le signal de parole incident et le signal d'écho réfléchi sur la ligne téléphonique prise en considération.

Bien entendu, les coefficients d'intercorrélation, notés c(ret) sont mémorisés en vue d'un traitement ultérieur qui permettra de discriminer la valeur de retard donnant le coefficient d'intercorrélation maximum pour un maximum de ressemblance entre le signal de parole et le signal d'écho.

L'étape 300 d'établissement des coefficients d'intercorrélation est alors suivie, ainsi que représenté sur la figure 1a, d'une étape de comparaison des coefficients d'intercorrélation c(ret) précités pour discriminer le coefficient d'intercorrélation de valeur la plus grande, pour une valeur de retard spécifique, laquelle représente la mesure du retard entre le signal d'écho et le signal de parole au point de mesure de la ligne téléphonique. Ce retard spécifique est noté $ret_s$.

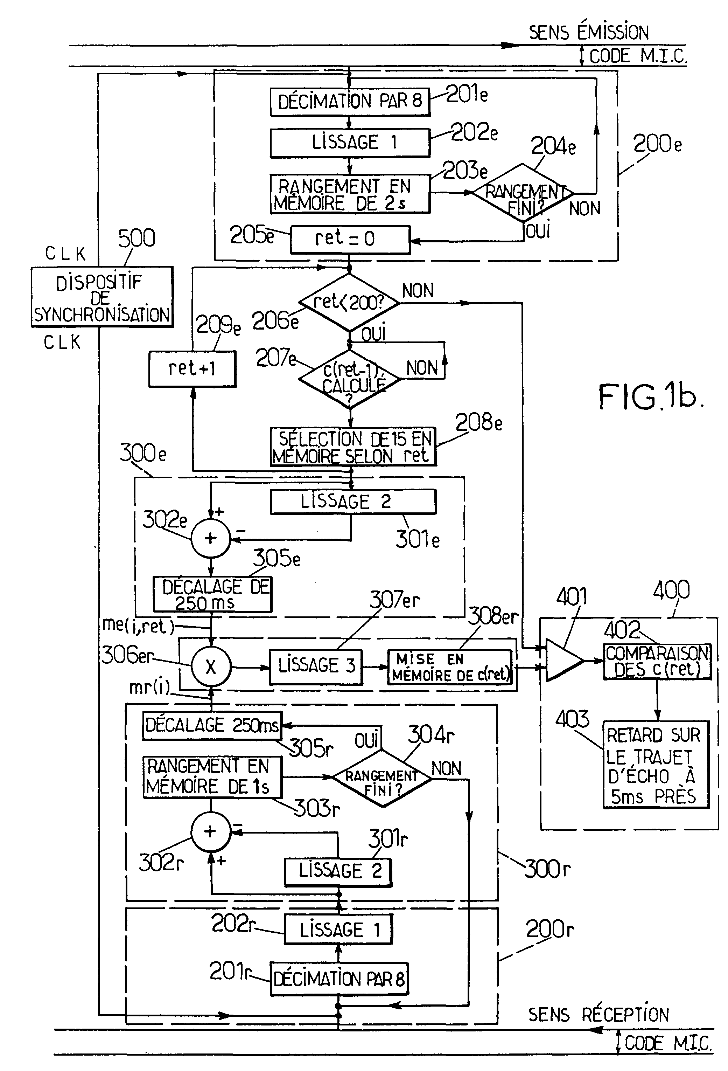

Une description plus détaillée du procédé de mesure sans intrusion de la qualité de transmission d'une ligne téléphonique, objet de la présente invention, tel qu'illustré en figure 1a, sera maintenant donnée en liaison avec la figure 1b.

Sur la figure 1b, on a représenté un organigramme général de mise en oeuvre des différentes étapes du procédé, objet de la présente invention.

Sur la figure 1b, on considère que l'étape de prélèvement des échantillons du signal de parole et du signal d'écho, portant la référence 100 sur la figure 1a, est effectuée de manière classique à partir des échantillons transitant sur la ligne téléphonique dans le sens d'émission du signal de parole, respectivement dans le sens de réception du signal d'écho. Ces opérations sont des opérations de type classique, et, à ce titre, ne seront pas décrites en détail.

Les échantillons prélevés $e_{(0)}$ à $e_{(15\ 999)}$ respectivement $r_{(0)}$ à $r_{(15\ 999)}$ sont des échantillons quantifiés en codage MIC précédemment cité.

Sur la figure 1b, on indique que les opérations correspondant aux étapes 200 et 300 de la figure la étant effectuées pour la plupart sur les échantillons prélevés du signal de parole respectivement sur les échantillons prélevés du signal d'écho, ces mêmes opérations relatives au signal de parole portent la référence e en indice, alors que ces opérations réalisées sur le signal d'écho portent la même référence avec l'indice **r**.

Ainsi que représenté sur la figure 1b, les échantillons prélevés sont ainsi soumis aux étapes $200_e$, $200_r$ pour réaliser le filtrage de type passe-bas à un sous-échantillonnage proprement dit, noté $201_e$ respectivement $201_r$, sous-échantillonnage réalisé par décimation par 8. De manière classique, on indique que ce sous-échantillonnage peut être réalisé par mémorisation des valeurs puis lecture d'une valeur sur 8, par exemple. Les opérations $201_e$ respectivement $201_r$ sont effectuées pendant la durée déterminée de deux secondes de prélèvement, respectivement pendant la moitié de cette durée décalée et permettent d'engendrer un signal de parole, sous-échantillonné, respectivement un signal d'écho sous-échantillonné. Les étapes de sous-échantillonnage $201_e$ respectivement $201_r$ sont alors suivies d'un lissage proprement dit par filtrage récursif pendant la durée correspondante, la durée déterminée pour le signal de parole sous-échantillonné, égale à deux secondes, et la durée sensiblement égale à la moitié de cette durée déterminée pour le signal d'écho sous-échantillonné, pour engendrer les signaux d'enveloppe du signal de parole ee(i) et du signal d'écho er(i) considéré. Les opérations de lissage proprement dit portent la référence $202_e$ respectivement $202_r$ sur la figure 1b. Les signaux d'enveloppe du signal de parole ee(i) peuvent alors être rangés en mémoire en une étape $203_e$, une boucle itérative $204_e$ permettant l'obtention des 2000 valeurs du signal d'enveloppe du signal de parole et leur rangement en mémoire ainsi que, en fin d'obtention de ces valeurs, une initialisation d'un pas de retard à la valeur zéro en une étape $205_e$.

Une boucle formée par les étapes $206_e$ de comparaison de la valeur du pas de retard à la valeur 200, de test $207_e$ relatif à l'obtention des coefficients d'intercorrélation, puis d'opération de sélection en mémoire $208_e$ d'un nombre d'échantillons correspondant à une durée d'une seconde et d'incrémentation du retard de la valeur + 1 en $209_e$ permet de préparer les valeurs des signaux d'enveloppe ee(i) pour l'étape de calcul des coefficients d'intercorrélation.

En ce qui concerne l'opération de lissage proprement dite, notée lissage 1 portant la référence $202_e$, respectivement $202_r$ sur la figure 1b, on indique que cette opération est réalisée par un filtrage récursif vérifiant la relation :

- pour le signal enveloppe du signal de parole :

$$ee(i) = ee(i-1).(1-1/128) + e(8i)/128.$$

Dans cette relation, ee(i) représente la valeur de l'amplitude du signal d'enveloppe pour l'échantillon de signal de parole e(i) de rang i, avec $i \in [0,1999]$, et

- pour le signal d'enveloppe du signal d'écho :

$$er(i) = er(i-1).(1-1/128) + r(8i+8000)/128.$$

Dans cette relation er(i) représente la valeur de l'amplitude du signal d'enveloppe pour l'échantillon de signal d'écho r(i) de rang i, avec $i \in [0,999]$.

Ainsi que représenté sur la figure 1b, le signal d'enveloppe du signal de parole et du signal d'écho sont ensuite soumis à l'étape de calcul des coefficients d'intercorrélation portant les références $300_e$ et $300_r$ sur la figure précitée.

D'une manière générale, on indique que les étapes précitées consistent pour chaque retard successif, ces retards étant compris entre 5 et 1000 millisecondes, au pas de 5 millisecondes par exemple, ainsi que mentionné précédemment, et obtenus grâce à la boucle $206_e$, $207_e$, $208_e$ et $209_e$ précédemment décrite, à effectuer un filtrage récursif pour déterminer la valeur moyenne du signal d'enveloppe du signal d'écho à l'opération $300_r$ sur la totalité de la durée du signal d'écho échantillonné. Cette opération de filtrage récursif est réalisée grâce à une opération de filtrage proprement dite, notée $301_r$, désignée par lissage 2 sur la figure 1b, et d'une boucle récursive entre la valeur d'entrée de l'opération $301_r$ et la valeur de sortie, et d'un opérateur de soustraction, noté $302_r$ sur la figure 1b. Une opération de rangement en mémoire de durée une seconde, c'est-à-dire correspondant au nombre d'échantillons prélevés pour le signal d'écho, est prévue en $303_r$. Un test relatif à l'obtention du nombre de valeurs moyennes correspondantes $304_r$ est prévu pour la poursuite du processus par bouclage vers l'opération de filtrage de type passe-bas $200_r$ ou au contraire vers une opération d'un décalage de 250 millisecondes, $305_r$, et permet d'obtenir les valeurs moyennes recentrées pour une opération de calcul des coefficients d'intercorrélation proprement dite. Ces valeurs moyennes recentrées sont notées mr(i) sur la figure 1b.

De la même manière, l'étape de calcul de la pluralité de coefficients d'intercorrélation consiste, pour chaque retard successif, à effectuer un filtrage récursif semblable, portant la référence $300_e$, sur le signal d'enveloppe du signal de parole sur la moitié correspondante, soit 1 seconde, de la durée du signal de parole échantillonné, par les opérations de lissage proprement dites $301_e$ et de bouclage récursif à partir des valeurs d'entrée de ce lissage proprement dit $301_e$ et de sortie de ce même lissage par l'intermédiaire d'un opérateur de soustraction $302_e$. Un décalage de 250 millisecondes portant la référence $305_e$ permet d'obtenir des valeurs moyennes centrées d'enveloppe du signal de parole, notées me(i,ret) pour chaque valeur successive de retard ret déterminée.

La pluralité de coefficients de corrélation, c'est-à-dire les coefficients c(ret) est alors établie sur une plage de temps de valeurs déterminée de la moitié correspondante des valeurs centrées des valeurs du signal d'écho et d'enveloppe du signal de parole, par calcul à partir des valeurs centrées d'enveloppe du signal d'écho mr(i) et du signal de parole me(i,ret). Dans l'exemple de réalisation choisi, les coefficients de corrélation c(ret) sont calculés entre les 750 dernières millisecondes de l'enveloppe centrée de réception, c'est-à-dire du signal d'écho, et les 750 millisecondes correspondantes de l'enveloppe centrée du signal de parole pour chacun des retards précités.

Ainsi que représenté sur la figure 1b, ce calcul est effectué au moyen d'un opérateur de multiplication portant la référence $306_{er}$ et d'une opération de filtrage récursif portant la référence $307_{er}$ désignée par lissage 3 sur la figure 1b. Les valeurs des coefficients d'intercorrélation c(ret) obtenus suite à l'opération de lissage 3, $306_{er}$, sont ensuite mises en mémoire en une opération notée $308_{er}$.

D'une manière générale, on indique que les valeurs centrées d'enveloppe du signal d'écho mr(i) vérifient la relation :

$$mr(i) = mr(i-1).(1-1/8)+er(i)/8,$$

pour $i \in [0,999]$.

La valeur centrée d'enveloppe du signal de parole me(i,ret) pour chaque valeur successive du retard ret, vérifie la relation :

$$me(i,ret) = me(i-1, ret).(1-1/8)+ee(i/1000-ret)/8,$$

pour $i \in [0,999]$.

Enfin, chaque coefficient d'intercorrélation c(ret) obtenu suite à l'opération de lissage 3, $307_{er}$, vérifie la relation :

$$c(ret) =$$

$$c(ret).(1-1/16)+[er(i)-mr(i)].[ee(i+1000-ret)-me(i,ret)]/16,$$

pour $i \in [250,999]$.

Suite à l'obtention des coefficients d'intercorrélation mémorisés à l'étape $308_{er}$, on indique, ainsi que représenté en figure 1b, que l'étape 400 de comparaison pour effectuer une discrimination du retard spécifique $ret_s$ peut être réalisée à partir d'une porte logique 401 permettant de commander l'opération de comparaison proprement dite à partir des valeurs des coefficients d'intercorrélation mises en mémoire au moyen d'une routine de comparaisons des coefficients portant la référence 402. La routine de comparaison des coefficients d'intercorrélation 402 permet d'obtenir le retard spécifique $ret_s$ sur le trajet d'écho avec une précision correspondant à la valeur d'un retard élémentaire ou pas de retard, soit 5 ms dans l'exemple de réalisation décrit.

Bien entendu, l'ensemble du processus de traitement décrit en liaison avec la figure 1b est réalisé en synchronisation à partir d'un module de synchronisation 500, lequel permet de délivrer tout signal d'horloge adapté, noté CLK, permettant la conduite du processus selon les étapes précédemment indiquées.

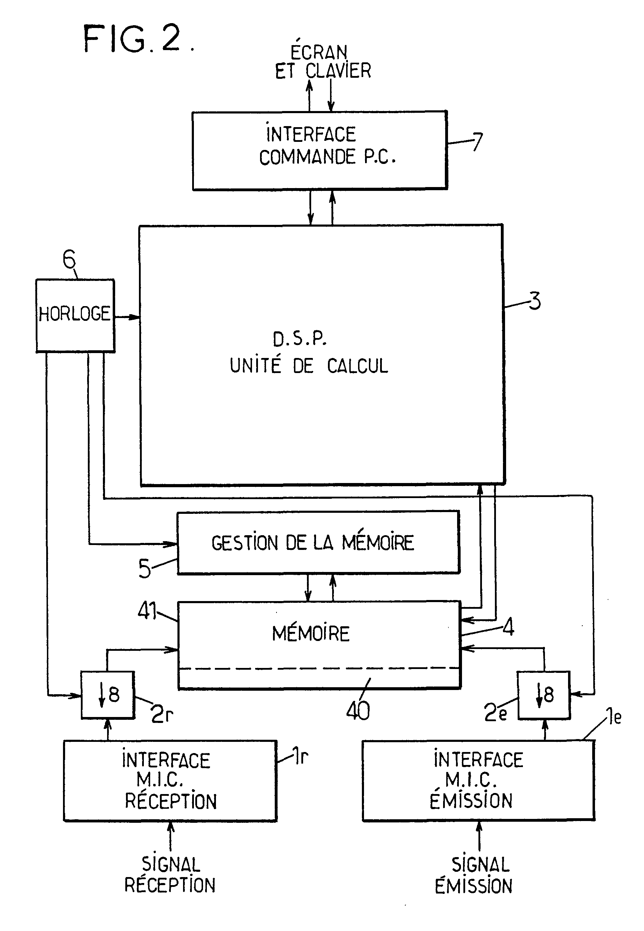

Une description plus détaillée d'un dispositif de mesure sans intrusion de la qualité de transmission d'une ligne téléphonique conforme à l'objet de la présente invention sera maintenant donnée en liaison avec la figure 2.

D'une manière générale, on indique que le dispositif objet de la présente invention comporte des circuits, notés le respectivement lr, de prélèvement sur une durée déterminée, sur le signal de parole et sur le signal d'écho, d'un nombre déterminé d'échantillons du signal de parole et du signal d'écho. Des circuits le et lr sont avantageusement constitués par un circuit d'interfaçage de type M.I.C. permettant la sélection du signal d'émission respectivement du signal de réception. Ces circuits sont des circuits de type classique, et, à ce titre, ne seront pas décrits en détail. Bien entendu, les circuits d'interfaçage le et lr sont interconnectés à la ligne téléphonique sur laquelle une mesure de qualité doit être effectuée et délivrent les échantillons successifs prélevés du signal de parole respectivement du signal d'écho.

Le dispositif objet de la présente invention comporte également des circuits de filtrage de type passe-bas sur une durée déterminée des échantillons du signal de parole et sur une durée égale à la moitié de cette durée déterminée, décalée de cette même durée des échantillons du signal d'écho.

Dans un mode de réalisation avantageux tel que représenté en figure 2, le circuit de filtrage de type passe-bas comprend au moins un premier et un deuxième circuit sous-échantillonneur, portant la référence $2_e$ respectivement $2_r$, interconnectés au premier respectivement au deuxième circuit d'interfaçage $1_e$, $1_r$. Les circuits sous-échantillonneurs permettent de délivrer un signal de parole et un signal d'écho sous-échantillonné. Ils peuvent être réalisés de manière non limitative par un circuit de mémorisation recevant le signal de parole, respectivement le signal d'écho sous-échantillonné à une fréquence déterminée, la fréquence 8 Khz telle que mentionnée précédemment. Ces circuits de mémorisation sont ensuite lus à une fréquence inférieure, dite fréquence de décimation, dont le rapport constitue le rapport de décimation choisi, le rapport 8 dans l'exemple décrit.

Les circuits de filtrage de type passe-bas comprennent en outre un module de lissage par filtrage récursif recevant le signal de parole et le signal d'écho sous-échantillonné et permettant d'engendrer les signaux d'enveloppe du signal de parole et du signal d'écho.

Dans un mode de réalisation préférentiel du dispositif objet de la présente invention, on indique que les circuits de lissage par filtrage récursif peuvent avantageusement être formés par une unité de calcul, portant la référence 3, cette unité de calcul étant constituée par exemple par un processeur de signal numérique (D.S.P.) muni d'une mémoire de programme spécifique comportant une routine de programme correspondant à la fonction de lissage notée lissage 1 sur la figure 1b. Bien entendu, à l'unité de calcul 3 est ainsi associée une mémoire 4 comportant par exemple une partie mémoire vive ou mémoire de travail 41 et une partie mémoire morte 40, laquelle comporte la routine précitée. Un circuit 5 de gestion de la mémoire est prévu, permettant l'adressage en lecture-écriture de la mémoire 4 et en particulier de la mémoire morte 40 et de la mémoire vive 41 associée à l'unité de calcul 3. De manière classique, une horloge 6 permet de synchroniser les opérations de l'ensemble.

Enfin, le dispositif objet de la présente invention comporte bien entendu un module de calcul des coefficients d'intercorrélation entre les signaux d'enveloppe du signal de parole et du signal d'écho pour les retards successifs distincts de pas de retard déterminé ainsi qu'un module de discrimination du coefficient d'intercorrélation de la plus grande valeur de ces coefficients pour la valeur de retard spécifique correspondante. Bien entendu, les modules précités sont constitués par l'unité de calcul 3 et la mémoire morte 40 associée, laquelle comporte des routines correspondantes telles que décrites en liaison avec la figure 1b, c'est-à-dire spécifiquement des routines correspondant aux opérateurs $306_{er}$, $307_{er}$ et $308_{er}$ respectivement 402 sur la figure 1b.

Du point de vue du fonctionnement, on indique que la partie 41 de la mémoire 4 constituant mémoire vive peut permettre par exemple de mémoriser les signaux de parole et d'écho sous-échantillonnés ainsi que tous les résultats de calculs intermédiaires permettant d'obtenir les coefficients d'intercorrélation c(ret) précités. Enfin, un circuit d'interfaçage 7 est prévu, ce circuit d'interfaçage de type liaison série par exemple étant interconnecté à l'unité de calcul 3 afin de permettre d'effectuer l'interconnexion du dispositif objet de la présente invention à un micro-ordinateur externe de pilotage par exemple.

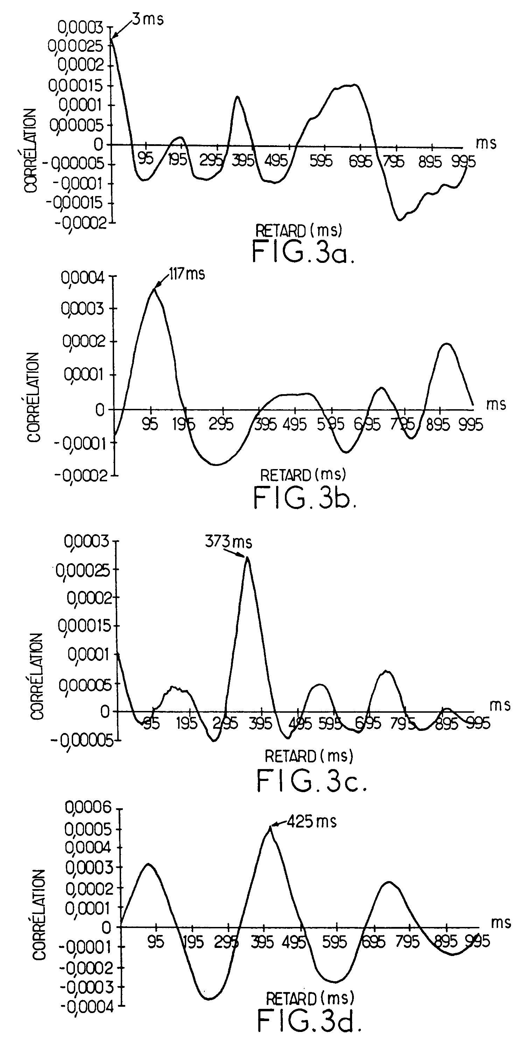

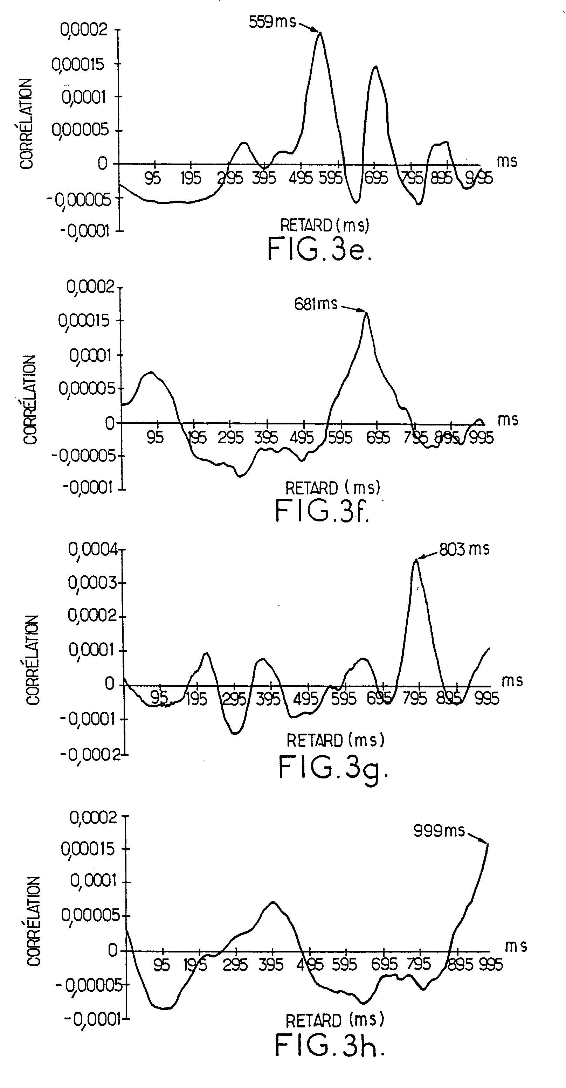

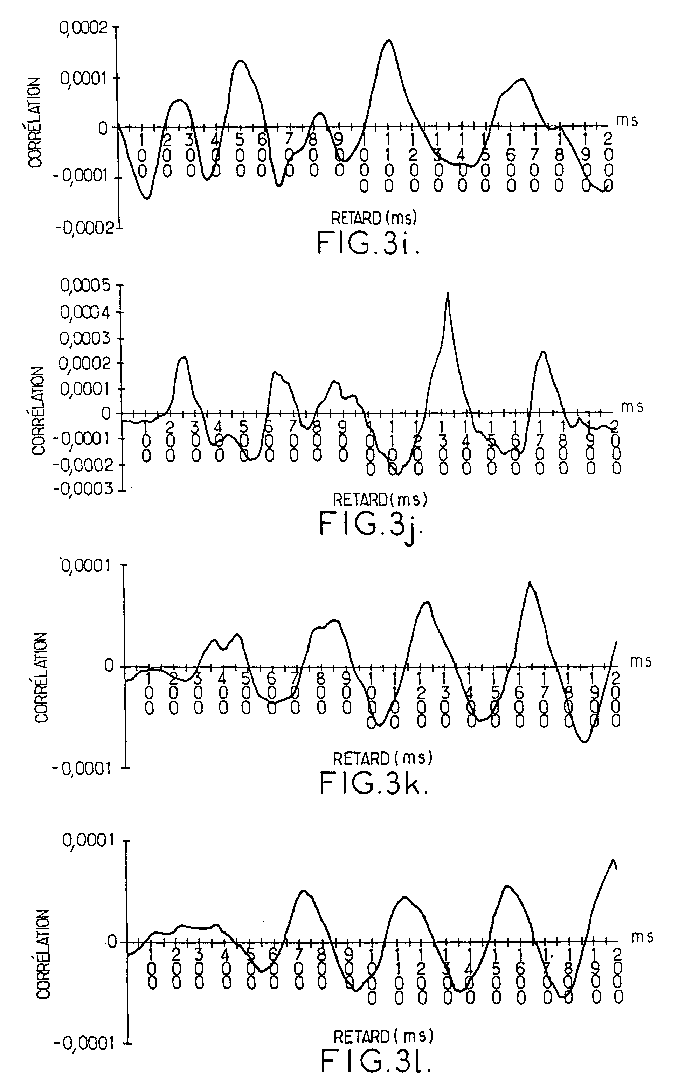

Les figures 3a à 3l permettent d'illustrer les résultats obtenus par la mise en oeuvre du procédé objet de la présente invention grâce au dispositif décrit en liaison avec la figure 2.

Le mode opératoire préconisé appliqué dans le domaine de fonctionnement des méthodes antérieures, c'est-à-dire pour des retards n'excédant pas 100 ms, donne des résultats d'une précision équivalente mais d'une façon beaucoup plus rapide.

En outre, on constate aisément la présence d'un maximum pour la valeur des coefficients d'intercorrélation portée en ordonnées et désignée par corrélation pour le décalage temporel ou retard spécifique $ret_s$ correspondant au retard sur le trajet d'écho. Ceci est particulièrement vérifié pour des valeurs de retard de 3 ms, 117 ms, 373 ms, 425 ms, 559 ms, 681 ms, 803 ms, 999 ms, 1111 ms, 1336 ms, 1651 ms et 1997 ms, ainsi que représenté sur les figures 3a à 3l précitées. On indique en outre que les diagrammes illustrés sur les figures précédentes permettent de mettre en évidence une qualité de fonctionnement sensiblement identique pour des mesures de retard pouvant atteindre une seconde, et ce sans surcharge excessive de calcul, puisque le calcul est effectué au moyen des 200 corrélations correspondant aux 200 pas de retard.

La limite de retard fixée actuellement à une seconde est réaliste vis-à-vis des conditions rencontrées sur le réseau téléphonique international.

Toutefois, cette limite peut être repoussée à des valeurs supérieures à une seconde et il suffit pour cela, par la mise en oeuvre du procédé et du dispositif objets de la présente invention, d'augmenter le nombre de calculs de corrélation, le pas de retard de 5 ms pouvant être conservé. Ce nombre de calculs de corrélation augmente d'autant le temps de calcul total mais maintient celui-ci dans des limites tout-à-fait raisonnables, les retards supérieurs à une seconde étant représentés en figures 3i à 3l.

On indique enfin que le procédé et le dispositif objets de la présente invention peuvent être utilisés non seulement pour des mesures sans intrusion mais également dans le cadre d'applications téléphoniques ultérieures nécessitant la connaissance des paramètres caractéristiques de l'écho.

**Revendications**

1. Procédé de mesure sans intrusion de la qualité de transmission d'une ligne téléphonique, à partir de mesures successives sur le signal de parole et le signal d'écho de ce signal de parole constitutifs du trafic, en un point de mesure de cette ligne téléphonique, **caractérisé en ce que** ledit procédé consiste :

   a)- à prélever (100) sur une durée déterminée sur ledit signal de parole et ledit signal d'écho transitant sur la ligne téléphonique, des échantillons du signal de parole et du signal d'écho ;
   b)- à effectuer un filtrage de type passe-bas (200) sur une durée déterminée sur lesdits échantillons du signal de parole et sur une durée sensiblement égale à la moitié de cette durée déterminée et décalée de la moitié de ladite durée déterminée sur lesdits échantillons du signal d'écho, pour obtenir les signaux d'enveloppe dudit signal de parole et dudit signal d'écho respectivement ;
   c) - à établir (300) une pluralité de coefficients d'intercorrélation entre lesdits signaux d'enveloppe du signal de parole et du signal d'écho, pour des retards successifs distincts de pas de retard déterminé ;
   d)- à comparer (400) les coefficients d'intercorrélation pour discriminer le coefficient d'intercorrélation de valeur la plus grande, pour une valeur de retard spécifique, ladite valeur de retard spécifique étant représentative de la mesure du retard dudit signal d'écho au point de mesure de la ligne téléphonique.

2. Procédé selon la revendication 1, **caractérisé en ce que** ladite durée déterminée pendant laquelle le signal de parole et le signal d'écho sont soumis à un prélèvement est sensiblement égale à 2 secondes.

3. Procédé selon la revendication 1 ou 2, **caractérisé en ce que** ledit filtrage de type passe-bas (200e, 200r) consiste à :

   b1) - sous-échantillonner (201e, 201r), pendant ladite durée déterminée respectivement pendant la moitié de cette durée décalée, lesdits échantillons du signal de parole et de signal d'écho pour engendrer un signal de parole sous-échantillonné respectivement un signal d'écho sous-échantillonné,
   b2)- lisser par un filtrage récursif (202e, 202r) pendant ladite durée le signal de parole sous-échantillonné et le signal d'écho sous-échantillonné, pour engendrer un signal d'enveloppe du signal de parole et du signal d'écho.

4. Procédé selon la revendication 3, **caractérisé en ce que** ledit lissage (202e, 202r) permettant d'engendrer le signal d'enveloppe du signal de parole et du signal d'écho est un filtrage récursif qui vérifie la relation :

$$ee(i) = ee(i-1) . (1-1/128) +e (8i) /128$$

où ee(i) représente la valeur de l'amplitude du signal d'enveloppe pour l'échantillon de signal de parole e(i) de rang i, avec $i \in [0,1999]$ et

$$er(i) = er(i-1).(1-1/128)+r(8i+8000)/128$$

où er(i) représente la valeur de l'amplitude du signal d'enveloppe pour l'échantillon de signal d'écho r(i) de rang i, avec $i \in [0,999]$.

5. Procédé selon l'une des revendications précédentes, **caractérisé en ce que** l'étape de calcul d'une pluralité de coefficients d'intercorrélation (300e, 300r) consiste pour chaque retard successif :

   - à effectuer un filtrage récursif (301r, 302r) pour déterminer la valeur moyenne du signal d'enveloppe du signal d'écho, sur la totalité de la durée du signal d'écho échantillonné,
   - à effectuer un filtrage récursif (301e, 302e) pour déterminer la valeur moyenne du signal d'enveloppe du signal de parole, sur la moitié correspondante de la durée du signal de parole échantillonné, lesdites opérations de filtrage adaptatif pour déterminer la valeur moyenne permettant d'obtenir (305e, 305r) des valeurs centrées d'enveloppe du signal d'écho mr(i) respectivement de parole me(i,ret), pour chaque valeur successive de retard ret déterminée,

- à calculer (307er) ladite pluralité de coefficients de corrélation sur une plage de temps de valeur déterminée de ladite moitié correspondante des valeurs centrées d'enveloppe du signal d'écho et d'enveloppe du signal de parole.

6. Dispositif de mesure sans intrusion de la qualité de transmission d'une ligne téléphonique, à partir de mesures successives sur le signal de parole et le signal d'écho de ce signal de parole constitutifs du trafic, en un point de mesure de cette ligne téléphonique, **caractérisé en ce que** ledit dispositif comporte :

- des moyens (1e, 1r) de prélèvement sur une durée déterminée sur ledit signal de parole et ledit signal d'écho d'un nombre déterminé d'échantillons du signal de parole et du signal d'écho ;
- des moyens de filtrage (2e, 2r, 3, 4), du type passe-bas, sur une durée déterminée des échantillons du signal de parole et sur une durée sensiblement égale à la moitié de cette durée déterminée, décalée de la moitié de cette durée déterminée des échantillons du signal d'écho, permettant d'engendrer des signaux d'enveloppe du signal de parole et du signal d'écho ;
- des moyens de calcul (3, 5, 40, 41) d'une pluralité de coefficients d'intercorrélation entre lesdits signaux d'enveloppe du signal de parole et du signal d'écho, pour des retards successifs distincts de pas de retard déterminé et de discrimination du coefficient d'intercorrélation de valeur la plus grande pour une valeur de retard spécifique, cette valeur de retard spécifique étant représentative de la mesure du retard du signal d'écho au point de mesure de la ligne téléphonique.

7. Dispositif selon la revendication 6, **caractérisé en ce que** lesdits moyens (1e, 1r) de prélèvement d'un nombre déterminé d'échantillons du signal de parole et du signal d'écho comprennent un premier (1e) et un deuxième (1r) circuit d'interfaçage interconnectés à la ligne téléphonique, sur laquelle une mesure de qualité doit être effectuée et délivrant des échantillons successifs du signal de parole respectivement du signal d'écho.

8. Dispositif selon l'une des revendications 6 ou 7, **caractérisé en ce que** lesdits moyens de filtrage de type passe-bas comprennent au moins :

- un premier (2e) et un deuxième (2r) circuit sous-échantillonneur interconnectés au premier (1e) respectivement au deuxième (1r) circuit d'interfaçage, permettant de délivrer un signal de parole et un signal d'écho sous-échantillonnés ;
- des moyens (3, 4, 40, 41) de lissage par filtrage adaptatif recevant le signal de parole et le signal d'écho sous-échantillonnés et permettant d'engendrer lesdits signaux d'enveloppe du signal de parole et du signal d'écho.

9. Dispositif selon la revendication 8, **caractérisé en ce que** le lesdits moyens de calcul d'une pluralité de coefficients d'intercorrélation sont formés par :

- un processeur de signal numérique (3) muni de ses mémoires de programmes (40),
- une mémoire de travail (41) de type mémoire vive, ladite mémoire de travail (41) étant interconnectée audit processus de signal numérique (2) et audit premier (2e) et deuxième (2r) circuit sous-échantillonneur et permettant de mémoriser lesdits signaux de parole et d'écho sous-échantillonnés, lesdits signaux d'enveloppe du signal de parole et du signal d'écho, et la valeur de retard spécifique représentative du retard du signal d'écho,
- un circuit d'interfaçage (7) de type liaison série interconnecté au processeur de signal numérique et permettant l'interconnexion à un micro-ordinateur externe.

10. Dispositif selon les revendications 8 et 9, **caractérisé en ce que** lesdits moyens de lissage par filtrage adaptatif sont formés par ledit processeur de signal numérique (3), muni d'une mémoire de programme spécifique.

**Patentansprüche**

1. Verfahren zur aufschaltungslosen Messung der Übertragungsqualität einer Telefonleitung mittels aufeinanderfolgender Messungen an dem Sprachsignal und dem Echosignal dieses Sprachsignals als Bestandteilen des Verkehrs an einem Messpunkt der Telefonleitung, **dadurch gekennzeichnet, dass** das Verfahren darin besteht,

a) über eine festgelegte Zeitdauer des Sprachsignals und des Echosignals, die auf der Telefonleitung laufen, Abtastwerte des Sprachsignals und des Echosignals abzugreifen (100),

b) über eine festgelegte Zeitdauer an den Abtastwerten des Sprachsignals und über eine Zeitdauer, die im Wesentlichen gleich der Hälfte dieser festgelegten Zeitdauer ist und um die Hälfte der festgelegten Zeitdauer versetzt ist, an den Abtastwerten des Echosignals eine Tiefpassfilterung (200) durchzuführen, um das jeweilige Hüllsignal des Sprachsignals und des Echosignals zu erhalten,

c) eine Mehrzahl von Interkorrelationskoeffizienten zwischen den Hüllsignalen des Sprachsignals und des Echosignals für aufeinanderfolgende, sich um eine festgelegte Verzögerungsschrittweite unterscheidende Verzögerungen zu gewinnen (300),

d) die Interkorrelationskoeffizienten zu vergleichen (400), um den Interkorrelationskoeffizienten größten Werts für einen bestimmten Verzögerungswert zu ermitteln, wobei der bestimmte Verzögerungswert für die Messung der Verzögerung des Echosignals an dem Messpunkt der Telefonleitung repräsentativ ist.

2. Verfahren nach Anspruch 1, **dadurch gekennzeichnet, dass** die festgelegte Zeitdauer, während der das Sprachsignal und das Echosignal einer Abtastung unterworfen werden, im Wesentlichen gleich 2 Sekunden ist.

3. Verfahren nach Anspruch 1 oder 2, **dadurch gekennzeichnet, dass** die Tiefpassfilterung (200e, 200r) darin besteht,

b1) die Abtastwerte des Sprachsignals und des Echosignals während der festgelegten Zeitdauer bzw. während der versetzten Hälfte dieser Zeitdauer unterabzutasten (201e, 201r), um ein unterabgetastetes Sprachsignal sowie ein unterabgetastetes Echosignal zu erzeugen,

b2) durch eine rekursive Filterung (202e, 202r) während der Zeitdauer das unterabgetastete Sprachsignal und das unterabgetastete Echosignal zu glätten, um ein Hüllsignal des Sprachsignals und des Echosignals zu erzeugen.

4. Verfahren nach Anspruch 3, **dadurch gekennzeichnet, dass** die Glättung (202e, 202r), die die Erzeugung des Hüllsignals des Sprachsignals und des Echosignals ermöglicht, eine rekursive Filterung ist, die die Beziehung erfüllt:

$$ee(i) = ee(i-1). (1-1/128)+e(8i)/128,$$

wobei ee(i) den Wert der Hüllsignalamplitude für den Sprachsignalabtastwert e(i) vom Rang i mit $i \in [0,1999]$ darstellt, und

$$er(i) = er(i-1). (1-1/128)+r(8i+8000)/128,$$

wobei er(i) den Wert der Hüllsignalamplitude für den Echosignalabtastwert r(i) vom Rang i mit $i \in [0,999]$ darstellt.

5. Verfahren nach einem der vorhergehenden Ansprüche, **dadurch gekennzeichnet, dass** der Schritt zur Berechnung einer Mehrzahl von Interkorrelationskoeffizienten (300e, 300r) für jede aufeinanderfolgende Verzögerung darin besteht,

- eine rekursive Filterung (301r, 302r) durchzuführen, um den Mittelwert des Hüllsignals des Echosignals über die gesamte Zeitdauer des abgetasteten Echosignals zu ermitteln,
- eine rekursive Filterung (301e, 302e) durchzuführen, um den Mittelwert des Hüllsignals des Sprachsignals über die entsprechende Hälfte der Zeitdauer des abgetasteten Sprachsignals zu ermitteln, wobei es diese adaptiven Filterungsvorgänge zur Mittelwertermittlung ermöglichen, für jeden aufeinanderfolgenden festgelegten Verzögerungswert ret zentrierte Werte der Einhüllenden des Echosignals mr(i) und des Sprachsignals me(i, ret) zu erhalten,
- die Mehrzahl von Korrelationskoeffizienten über einen Zeitbereich festgelegten Werts von der entsprechenden Hälfte der zentrierten Werte der Einhüllenden des Echosignals und der Einhüllenden des Sprachsignals zu berechnen.

6. Einrichtung zur aufschaltungslosen Messung der Übertragungsqualität einer Telefonleitung mittels aufeinanderfolgender Messungen an dem Sprachsignal und dem Echosignal dieses Sprachsignals als Bestandteilen des Ver-

EP 0 741 471 B1

kehrs an einem Messpunkt der Telefonleitung, **dadurch gekennzeichnet, dass** die Einrichtung umfasst:

- Abtastmittel (1e, 1r) zum Abgriff einer festgelegten Anzahl von Abtastwerten des Sprachsignals und des Echosignals über eine festgelegte Zeitdauer des Sprachsignals und des Echosignals,
- Filterungsmittel (2e, 2r, 3, 4) zur Tiefpassfilterung der Abtastwerte des Sprachsignals über eine festgelegte Zeitdauer und der Abtastwerte des Echosignals über eine Zeitdauer, die im Wesentlichen gleich der Hälfte dieser festgelegten Zeitdauer ist und um die Hälfte dieser festgelegten Zeitdauer versetzt ist, was es ermöglicht, Hüllsignale des Sprachsignals und des Echosignals zu erzeugen,
- Berechnungsmittel (3, 5, 40, 41) zur Berechnung einer Mehrzahl von Interkorrelationskoeffizienten zwischen den Hüllsignalen des Sprachsignals und des Echosignals für aufeinanderfolgende, sich um eine festgelegte Verzögerungsschrittweite unterscheidende Verzögerungen und zur Ermittlung des Interkorrelationskoeffizienten größten Werts für einen bestimmten Verzögerungswert,

wobei dieser bestimmte Verzögerungswert für die Messung der Verzögerung des Echosignals an dem Messpunkt der Telefonleitung repräsentativ ist.

**7.** Einrichtung nach Anspruch 6, **dadurch gekennzeichnet, dass** die Abtastmittel (1e, 1r) zum Abgriff einer festgelegten Anzahl von Abtastwerten des Sprachsignals und des Echosignals eine erste (1e) sowie eine zweite (1r) Schnittstellenschaltung umfassen, die mit der Telefonleitung verbunden sind, an der eine Qualitätsmessung vorgenommen werden soll, und die aufeinanderfolgende Abtastwerte des Sprachsignals bzw. des Echosignals bereitstellen.

**8.** Einrichtung nach einem der Ansprüche 6 oder 7, **dadurch gekennzeichnet, dass** die Tiefpassfilterungsmittel zumindest umfassen:

- eine erste (2e) und eine zweite (2r) Unterabtastschaltung, die mit der ersten (1e) bzw. der zweiten (1r) Schnittstellenschaltung verbunden sind und es ermöglichen, ein unterabgetastetes Sprachsignal und ein unterabgetastetes Echosignal bereitzustellen,
- Glättungsmittel (3, 4, 40, 41) zur Glättung durch adaptive Filterung, welche das unterabgetastete Sprachsignal und das unterabgetastete Echosignal erhalten und es ermöglichen, die Hüllsignale des Sprachsignals und des Echosignals zu erzeugen.

**9.** Einrichtung nach Anspruch 8, **dadurch gekennzeichnet, dass** die Berechnungsmittel zur Berechnung einer Mehrzahl von Interkorrelationskoeffizienten gebildet sind von:

- einem mit seinen Programmspeichern (40) versehenen digitalen Signalprozessor (3),
- einem Arbeitsspeicher (41) vom Lebendspeichertyp, wobei der Arbeitsspeicher (41) mit dem digitalen Signalprozessor (2) und der ersten (2e) sowie der zweiten (2r) Unterabtastschaltung verbunden ist und es erlaubt, die unterabgetasteten Sprach- und Echosignale, die Hüllsignale des Sprachsignals und des Echosignals sowie den für die Verzögerung des Echosignals repräsentativen bestimmten Verzögerungswert zu speichern,
- einer mit dem digitalen Signalprozessor verbundenen Schnittstellenschaltung (7) vom Reihenverbindungstyp, welche die Zusammenschaltung mit einem externen Mikrocomputer erlaubt.

**10.** Einrichtung nach den Ansprüchen 8 und 9, **dadurch gekennzeichnet, dass** die Glättungsmittel zur Glättung durch adaptive Filterung von dem mit einem Speicher für ein spezielles Programm versehenen digitalen Signalprozessor (3) gebildet sind.

**Claims**

**1.** Method of non-intrusive measurement of the transmission quality of a telephone line, based on successive measurements of the speech signal and the echo signal of this speech signal making up the traffic, at a point of measurement on this telephone line, **characterised in that** said method consists in:

a) - taking samples (100) of the speech signal and the echo signal for a given period as said speech signal and said echo signal pass across the telephone line;
b) - performing low-pass type filtering (200) for a given period on said speech signal samples and for a period substantially equal to half this given period and shifted by half of said given period on said echo signal samples

**11**

to obtain envelope signals of said speech signal and said echo signal respectively;

c) - establishing (300) a plurality of cross-correlation coefficients between said envelope signals of the speech signal and the echo signal for separate successive delays of a given delay lag;

d) - comparing (400) the cross-correlation coefficients in order to identify the cross-correlation coefficient having the highest value for a specific delay value, said specific delay value being representative of the delay measurement of said echo signal at the measurement point of the telephone line.

2. Method as claimed in claim 1, **characterised in that** said given period during which the speech signal and the echo signal are sampled is substantially equal to 2 seconds.

3. Method as claimed in claim 1 or 2, **characterised in that** said low-pass type filtering (200e, 200r) consists in:

b1) - sub-sampling (201e, 201r) for said given period, respectively for half of this period, shifted, said speech signal and echo signal samples to generate a sub-sampled speech signal and a sub-sampled echo signal respectively,

b2) - for said period, smoothing by recursive filtering (202e, 202r) the sub-sampled speech signal and the sub-sampled echo signal to generate an envelope signal of the speech signal and the echo signal.

4. Method as claimed in claim 3, **characterised in that** said smoothing (202e, 202r) enabling the envelope signal of the speech signal and the echo signal to be generated is a recursive filtering which verifies the equation:

$$ee(i) = ee(i-1).(1-1/128)+e(8i)/128$$

where ee(i) represents the amplitude value of the envelope signal for the sample of the speech signal e(i) of rank i, where $i \in [0,1999]$ and

$$er(i) = er(i-1).(1-1/128)+r(8i+8000)/128$$

where er(i) represents the amplitude value of the envelope signal for the sample of the echo signal r(i) of rank i, where $i \in [0,999]$.

5. Method as claimed in one of the preceding claims, **characterised in that** the step at which a plurality of cross-correlation coefficients is calculated (300e, 300r) consists, for each successive delay, in:

- applying recursive filtering (301r, 302r) to determine the average value of the envelope signal of the echo signal for the entire duration of the sampled echo signal,
- applying recursive filtering (301e, 302e) to determine the average value of the envelope signal of the speech signal for the corresponding half of the duration of the sampled speech signal, said adaptive filtering operations to determine the average value enabling centred envelope values of the echo signal mr(i) and speech signal me(i,ret) respectively to be obtained (305e, 305r) for each given successive delay value ret,
- computing (307er) said plurality of correlation coefficients over a given time range of values of said corresponding half of the centred echo signal envelope and speech signal envelope values.

6. Device for non-intrusive measurement of the transmission quality of a telephone line from successive measurements taken on the speech signal and the echo signal of this speech signal constituting the traffic, at a point of measurement of this telephone line, **characterised in that** said device comprises:

- means (1e, 1r) for taking a given number of speech signal and echo signal samples on said speech signal and said echo signal over a given period;
- means, of the low-pass type, for filtering (2e, 2r, 3, 4) speech signal samples for a given period and echo signal samples for a period substantially equal to half of this given period, shifted by half of this given period, enabling envelope signals of the speech signal and echo signal to be generated;
- means for calculating (3, 5, 40, 41) a plurality of cross-correlation coefficients between said envelope signals of the speech signal and the echo signal, for separate successive delays of a given delay lag and identifying the cross-correlation coefficient having the highest value for a specific delay value, this specific delay value being representative of the delay measurement of the echo signal at the point of measurement of the telephone line.

7. Device as claimed in claim 6, **characterised in that** said means (1e, 1r) for taking a given number of samples of the speech signal and the echo signal comprise a first (1e) and a second (1r) interfacing circuit inter-connected with the telephone line on which a quality measurement is to be taken and emitting successive speech signal and echo signal samples respectively.

8. Device as claimed in one of claims 6 or 7, **characterised in that** said filtering means of the low-pass type comprise at least:

   - a first (2e) and a second (2r) sub-sampler circuit inter-connected with the first (1e), respectively the second (1r) interfacing circuit enabling a sub-sampled speech signal and echo signal to be emitted;
   - smoothing means (3, 4, 40, 41) by adaptive filtering, receiving the sub-sampled speech signal and echo signal and enabling said envelope signals of the speech signal and echo signal to be generated.

9. Device as claimed in claim 8, **characterised in that** said means of calculating a plurality of cross-correlation coefficients consist of:

   - a digital signal processor (3) provided with its programme memories (40),
   - a working memory (41) of the random access type, said working memory (41) being inter-connected with said digital signal process (2) and said first (2e) and second (2r) sub-sampler circuits and enabling said sub-sampled speech and echo signals, said envelope signals of the speech signal and the echo signal and the specific delay value representative of the delay in the echo signal to be stored,
   - an interfacing circuit (7) of the serially connected type inter-connected with the digital signal processor and enabling an external micro-computer to be inter-connected.

10. Device as claimed in claims 8 and 9, **characterised in that** said smoothing means by adaptive filtering consist of said digital signal processor (3) provided with a specific programme memory.

# FIG.1a.

PRÉLÈVEMENT
ÉCHANTILLONS
SIGNAL DE PAROLE
SIGNAL D'ÉCHO                                    100

e(o) à e (15 999)    r(o) à r (15 999)

FILTRAGE PASSE-BAS
ÉCHANTILLONS
SIGNAL DE PAROLE
SIGNAL D'ÉCHO
SIGNAUX ENVELOPPE                                200

e e(i)          er(i)

COEFFICIENTS
D'INTER CORRÉLATION
ENTRE SIGNAUX
D'ENVELOPPE                                      300

c(r et)

COMPARAISON
DISCRIMINATION
RETARD SPÉCIFIQUE
$ret_s$ MESURE DU
RETARD SIGNAL ÉCHO/
SIGNAL PAROLE                                    400

FIG.1b.

# FIG.2.

ÉCRAN
ET CLAVIER

INTERFACE
COMMANDE P.C. — 7

HORLOGE 6

D.S.P.
UNITÉ DE CALCUL — 3

GESTION DE LA MÉMOIRE
5

41
MÉMOIRE — 4

40

↓8 2r

↓8 2e 1e

INTERFACE
M.I.C.
RÉCEPTION — 1r

INTERFACE
M.I.C.
ÉMISSION

SIGNAL
RÉCEPTION

SIGNAL
ÉMISSION

FIG.3a.

FIG.3b.

FIG.3c.

FIG.3d.

FIG.3e.

FIG.3f.

FIG.3g.

FIG.3h.

FIG.3i.

FIG.3j.

FIG.3k.

FIG.3l.